# EUROPEAN PATENT APPLICATION

(11) **EP 4 685 638 A1**
(43) Date of publication of application: **28.01.2026**
(21) Application number: 24858055.7
(22) Date of filing: 05.07.2024
(51) Int. Cl.: G06F 9/455

(54) **CROSS-SYSTEM TARGET OBJECT DRAGGING METHOD AND ELECTRONIC DEVICE**

(30) Priority: 29.08.2023 CN 202311102700
(71) Applicant: Huawei Technologies Co., Ltd., Shenzhen, Guangdong 518129 (CN)
(72) Inventor: LI, Qidian, Shenzhen, Guangdong 518129 (CN)
(74) Representative: Gill Jennings & Every LLP
(86) International application number: PCT/CN2024/104040
(87) International publication number: WO 2025/044511

(57) **Abstract**

This application provides a method for dragging and dropping a target object across systems and an electronic device. The electronic device includes a first operating system and a second operating system, a first application runs on the first operating system, and a second application runs on the second operating system. The method includes: obtaining a drag-and-drop event in response to an operation of dragging the target object from the first application and dropping the target object to the second application by a user, where the drag-and-drop event includes a drag-and-drop event type and the target object; sending the drag-and-drop event to the second operating system, and creating a virtual window of the first application on the second operating system based on the drag-and-drop event; and sending the drag-and-drop event from the virtual window of the first application to the second application, and displaying the target object on the second application. In the method provided in this application, the target object can be dragged and dropped between the first operating system and the second operating system, enhancing user experience.

## Description

This application claims priority to Chinese Patent Application No. 2023111027007, filed with the China National Intellectual Property Administration on August 29, 2023 and entitled "METHOD FOR DRAGGING AND DROPPING TARGET OBJECT ACROSS SYSTEMS AND ELECTRONIC DEVICE", which is incorporated herein by reference in its entirety.

### TECHNICAL FIELD

This application relates to the field of electronic technologies, and more specifically, to a method for dragging and dropping a target object across systems and an electronic device.

### BACKGROUND

An operating system is a set of interrelated system software programs that manage and control computer operations, use and run hardware and software resources, and provide public services to organize user interaction. Based on a running environment, the operating system may be classified into a desktop operating system, a mobile phone operating system, a server operating system, an embedded operating system, or the like.

An operating system virtualization technology means to divide one real hardware resource into a plurality of virtual hardware resources by using a virtualization technology, so that the virtual hardware resources are used by a plurality of operating systems at the same time, thereby improving resource utilization and efficiency of the entire system.

As a type of operating system virtualization technology, a containerization technology allows a plurality of applications to run in isolated environments that share a same host operating system (Host OS) kernel. A host operating system provides isolated running environments for the applications, that is, container instances. An architecture of the containerization technology may be divided into a container instance layer, a container management layer, and a kernel resource layer. The most fundamental difference between the containerization technology and conventional virtualization is that in conventional virtualization, a guest operating system (Guest OS) needs to be installed to execute an application, and in operating system virtualization, the guest OS is replaced with a shared host operating system kernel.

By using virtualization technologies such as containerization, applications of the guest operating system can run in the host operating system. Therefore, how to implement better compatibility between the host operating system and the guest operating system and enhance user experience is a problem of wide concern in the industry.

### SUMMARY

This application provides a method for dragging and dropping a target object across systems and an electronic device. In the method, the target object can be dragged and dropped across systems, enhancing user experience.

According to a first aspect, this application provides a method for dragging and dropping a target object across systems. The method provided in the first aspect may be performed by an electronic device, or may be performed by a module (for example, a processor, a chip, or a chip system) used in the electronic device, or may be implemented by a logical node, a logical module, or software that can implement all or some functions of the electronic device. This is not limited in this application.

Specifically, the electronic device includes a first operating system and a second operating system, a first application runs on the first operating system, and a second application runs on the second operating system. The method includes: obtaining a drag-and-drop event in response to an operation of dragging the target object from the first application and dropping the target object to the second application by a user; sending the drag-and-drop event to the second operating system, and creating a virtual window of the first application on the second operating system based on the drag-and-drop event; and sending the drag-and-drop event from the virtual window of the first application to the second application, and displaying the target object on the second application.

According to the method provided in the first aspect, when the user initiates the drag-and-drop event from the application of the first operating system to the application of the second operating system, the electronic device may obtain the drag-and-drop event, send the drag-and-drop event to the second operating system, construct a virtual drag-and-drop source of the application of the first operating system on the second operating system, and then send the drag-and-drop event to the target application from the virtual drag-and-drop source, so that a complete drag-and-drop protocol is implemented, and the target object can be dragged and dropped across systems based on the complete drag-and-drop protocol.

In a possible implementation of the first aspect, the drag-and-drop event includes a drag-and-drop event type and the target object.

In a possible implementation of the first aspect, the drag-and-drop event type includes at least one of a drag-in event, a move event, and a release event. In this implementation, the virtual window of the first application may be created in the second operating system, that is, the virtual drag-and-drop source is constructed on the second operating system, based on any event in the drag-and-drop event type.

For example, after the electronic device obtains the drag-in event, the electronic device may create the virtual window of the first application on the second operating system in real time, to emulate the drag-and-drop event of the first operating system on the second operating system in real time. Certainly, the electronic device may alternatively create the virtual window of the first application on the second operating system after obtaining the move event or the release event. This is not specifically limited in this embodiment of this application.

In a possible implementation of the first aspect, a first source window is displayed on the first application, the target object is displayed in the first source window, the first operating system includes a shell application shell APK of the second application, and obtaining the drag-and-drop event in response to the operation of dragging the target object from the first application and dropping the target object to the second application by the user includes: obtaining the drag-and-drop event in response to a drag-and-drop operation performed by the user from the first source window to the shell application. In this implementation, the drag-and-drop event sent to the second application may be obtained by using the shell application on the first operating system, to forward the drag-and-drop event.

In a possible implementation of the first aspect, creating the virtual window of the first application on the second operating system based on the drag-and-drop event includes: creating a second source window on the second operating system based on the drag-and-drop event, where the second source window corresponds to the first source window. In this implementation, the second source window on the second operating system emulates the first source window (the drag-and-drop source) on the first operating system, to construct a complete x11 drag-and-drop protocol and implement a cross-system drag-and-drop operation.

In a possible implementation of the first aspect, sending the drag-and-drop event from the virtual window of the first application to the second application includes: sending the drag-and-drop event from the second source window to the second application. In this implementation, as the drag-and-drop source, the second source window emulated by the second operating system sends the drag-and-drop event to the second application, to implement a cross-system drag-and-drop operation.

In a possible implementation of the first aspect, before creating the virtual window of the first application on the second operating system based on the drag-and-drop event, the method further includes: converting a data structure of the drag-and-drop event into a data structure supported by the second operating system. In this implementation, the drag-and-drop event may be recognized in the second operating system through conversion of the data structure.

In a possible implementation of the first aspect, the electronic device includes a shared directory of the first operating system and the second operating system, and sending the drag-and-drop event from the virtual window of the first application to the second application includes: sending a first path to the second operating system, where the first path indicates a path for the first operating system to obtain the target object from the shared directory; converting the first path into a second path, where the second path is a path for the second operating system to obtain the target object from the shared directory; and obtaining the target object from the shared directory based on the second path. In this implementation, when data of the target object is excessively large, the data is transmitted in a manner of the shared directory. This can avoid reducing power consumption of the electronic device due to occupation of the system internal memory, and enhance user experience.

In a possible implementation of the first aspect, the virtual window of the first application includes a handle of the virtual window of the first application. In this implementation, the virtual window that is of the first application and that is created in the second operating system needs to include only the handle of the virtual window, so that implementation complexity is reduced.

In a possible implementation of the first aspect, the first operating system and the second operation communicate based on a Remote Desktop Protocol RDP.

According to a second aspect, an electronic device is provided. The electronic device includes a first operating system and a second operating system. A first application runs on the first operating system, and a second application runs on the second operating system. The first operating system is configured to obtain a drag-and-drop event in response to an operation of dragging a target object from the first application and dropping the target object to the second application by a user; the first operating system is further configured to send the drag-and-drop event to the second operating system; the second operating system is configured to create a virtual window of the first application on the second operating system based on the drag-and-drop event; and the second operating system is further configured to: send the drag-and-drop event from the virtual window of the first application to the second application, and display the target object on the second application.

According to the electronic device provided in the second aspect, the first operating system may obtain the drag-and-drop event in response to initiating the drag-and-drop event by the user from the application of the first operating system to the application of the second operating system, and sends the drag-and-drop event to the second operating system, and the second operating system constructs a virtual drag-and-drop source of the application of the first operating system, and then sends the drag-and-drop event to the target application from the virtual drag-and-drop source, so that a complete drag-and-drop protocol is implemented, and the second operating system can drag and drop the target object across systems based on the complete drag-and-drop protocol.

In a possible implementation of the second aspect, the drag-and-drop event includes a drag-and-drop event type and the target object.

In a possible implementation of the second aspect, the drag-and-drop event type includes at least one of a drag-in event, a move event, and a release event. In this implementation, the virtual window of the first application may be created in the second operating system, that is, the virtual drag-and-drop source is constructed on the second operating system, based on any event in the drag-and-drop event type.

For example, after the electronic device obtains the drag-in event, the electronic device may create the virtual window of the first application on the second operating system in real time, to emulate the drag-and-drop event of the first operating system in the second operating system in real time. Certainly, the electronic device may alternatively create the virtual window of the first application on the second operating system after obtaining the move event or the release event. This is not specifically limited in this embodiment of this application.

In a possible implementation of the second aspect, a first source window is displayed on the first application, the target object is displayed in the first source window, the first operating system includes a shell application of the second application, and the first operating system is configured to obtain the drag-and-drop event in response to a drag-and-drop operation performed by the user from the first source window to the shell application. In this implementation, the drag-and-drop event sent to the second application may be obtained by using the shell application on the first operating system, to forward the drag-and-drop event.

In a possible implementation of the second aspect, the second operating system is configured to create a second source window based on the drag-and-drop event, where the second source window corresponds to the first source window. In this implementation, the second source window on the second operating system emulates the first source window (the drag-and-drop source) on the first operating system, to construct a complete x11 drag-and-drop protocol and implement a cross-system drag-and-drop operation.

In a possible implementation of the second aspect, the second operating system is configured to send the drag-and-drop event from the second source window to the second application. In this implementation, as the drag-and-drop source, the second source window emulated by the second operating system sends the drag-and-drop event to the second application, to implement a cross-system drag-and-drop operation.

In a possible implementation of the second aspect, the second operating system is configured to convert a data structure of the drag-and-drop event into a data structure supported by the second operating system. In this implementation, the drag-and-drop event may be recognized in the second operating system through conversion of the data structure.

In a possible implementation of the second aspect, the electronic device includes a shared directory of the first operating system and the second operating system; the first operating system is configured to send a first path to the second operating system, where the first path indicates a path for the first operating system to obtain the target object from the shared directory; the second operating system is configured to convert the first path into a second path, where the second path is a path for the second operating system to obtain the target object from the shared directory; and the second operating system obtains the target object from the shared directory based on the second path. In this implementation, when data of the target object is excessively large, the data is transmitted in a manner of the shared directory. This can avoid reducing power consumption of the electronic device due to occupation of the system internal memory, and enhance user experience.

In a possible implementation of the second aspect, the virtual window of the first application includes a handle of the virtual window of the first application. In this implementation, the virtual window that is of the first application and that is created in the second operating system needs to include only the handle of the virtual window, so that implementation complexity is reduced.

In a possible implementation of the second aspect, the first operating system and the second operation communicate based on a Remote Desktop Protocol RDP.

In a possible implementation of the second aspect, the shell application of the second application includes a drag-and-drop service module, and the drag-and-drop service module is configured to obtain the drag-and-drop event.

In a possible implementation of the second aspect, the first operating system includes an RDP client, the second operating system includes an RDP server, the RDP client is configured to send the drag-and-drop event to the second operating system, the RDP server is configured to receive the drag-and-drop event sent by the first operating system, and the RDP client and the RDP server communicate based on the RDP.

According to a third aspect, a communication apparatus is provided. The communication apparatus includes units configured to perform the steps in any one of the first aspect or the possible implementations of the first aspect.

According to a fourth aspect, a communication apparatus is provided. The communication apparatus includes at least one processor and a memory. The processor is coupled to the memory, the memory stores program instructions, and when the program instructions stored in the memory are executed by the processor, the method in any one of the first aspect or the possible implementations of the first aspect is performed.

According to a fifth aspect, a communication apparatus is provided. The communication apparatus includes at least one processor and an interface circuit. The at least one processor is configured to perform the method in any one of the first aspect or the possible implementations of the first aspect.

According to a sixth aspect, an electronic device is provided. The electronic device includes the communication apparatus provided in the third aspect, or the electronic device includes the communication apparatus provided in the third aspect, or the electronic device includes the communication apparatus provided in the fourth aspect.

In a possible implementation of the sixth aspect, the electronic device may be any one of a mobile phone, a tablet, a personal computer, or an automotive infotainment system.

According to a seventh aspect, a computer program product is provided. The computer program product includes a computer program. When the computer program is executed by a processor, the method in any one of the first aspect or the possible implementations of the first aspect is performed.

According to an eighth aspect, a computer-readable storage medium is provided. The computer-readable storage medium stores a computer program. When the computer program is executed, the method in any one of the first aspect or the possible implementations of the first aspect is performed.

According to a ninth aspect, a chip is provided. The chip includes a processor, configured to: invoke a computer program from a memory and run the computer program, so that a communication device in which the chip is installed performs the method in any one of the first aspect or the possible implementations of the first aspect.

### BRIEF DESCRIPTION OF DRAWINGS

FIG. 1 is a diagram of a manner of dragging and dropping a target object across systems provided in a related technology;
FIG. 2 is a diagram of an interface for dragging and dropping a file between an Android operating system and a Linux operating system in a related technology;
FIG. 3 is a diagram of a structure of an electronic device 100 according to this application;
FIG. 4 is a diagram of an architecture to which a method for dragging and dropping a target object across systems is applicable according to an embodiment of this application;
FIG. 5 is a diagram of another architecture to which a method for dragging and dropping a target object across systems is applicable according to an embodiment of this application;
FIG. 6 is a diagram of an interface for dragging and dropping a target object across systems according to an embodiment of this application;
FIG. 7 is a principle diagram of a method for dragging and dropping a target object across systems according to an embodiment of this application;
FIG. 8(a) and FIG. 8(b) are diagrams of another interface for dragging and dropping a target object across systems according to an embodiment of this application;
FIG. 9 is a schematic flowchart of a method 900 for dragging and dropping a target object across systems according to an embodiment of this application; and
FIG. 10 is a diagram of a structure of an electronic device according to this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. As used in the specification and the appended claims of this application, the singular expressions "one", "a", "the foregoing", "the", and "this" are intended to also include expressions such as "one or more", unless otherwise specified in the context clearly. It should be further understood that, in embodiments of this application, "one or more" refers to one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

"A plurality of" in embodiments of this application means "greater than or equal to two". It should be noted that in the descriptions of embodiments of this application, the terms such as "first" and "second" are merely intended for distinction in description, but should not be construed as indicating or implying relative importance or indicating or implying a sequence.

With the emergence of a personal computer (personal computer, PC) application engine, a PC may further implement ecological integration with a mobile phone, that is, a user may deploy a virtual PC system on a mobile terminal. In a dual-framework HSL (Harmony Subsystem for Linux) project of a single terminal device, compatibility of an Android (Android) operating system to a Linux operating system may be implemented. For example, a Linux application in the Linux operating system may run on the Android operating system in a form of a guest (a virtual machine or a container), and the Android operating system is also referred to as a host operating system. For example, a Linux application such as WPS or CAJ Viewer may run in the Android operating system by using a container environment.

For example, in a scenario in which the Android operating system is used as the host operating system and the Linux operating system is used as a guest operating system, a text, a file, and a picture may need to be dragged and dropped between an Android application and a Linux application. Currently, the Android operating system provides a native dragging-and-dropping capability. Objects such as a text, a file, and a picture can be dragged and dropped between Android applications. The Linux operating system also provides dragging and dropping of objects such as a text, a file, and a picture between Linux applications based on an x11 drag-and-drop protocol (x indicates an x protocol, and 11 is a protocol version number). The Android drag-and-drop protocol needs to be better compatible with the Linux drag-and-drop protocol, to implement direct dragging and dropping between the Android operating system and the Linux operating system, thereby providing better interaction experience for users.

It should be understood that the x11 protocol is an 11^{th} version protocol of an x window system (x window system), and is a standard protocol used for a graphical user interface. The x11 protocol is designed to provide an extensible, network-transparent, and cross-platform graphical user interface. In the x11 protocol, a client and a display server communicate with each other by using a network. The client sends a request, and the display server responds to the request and returns a result.

When a Linux application runs on the Android operating system, data such as a text, a file, and a picture may need to be dragged and dropped between the Android application and the Linux application to share data. The Android operating system provides a native dragging-and-dropping capability based on an Android Framework. Therefore, data such as a text, a file, and a picture can be dragged and dropped between Android applications. The Linux operating system also provides a dragging-and-dropping capability based on the x11 protocol. Therefore, Linux applications can be dragged and dropped between each other. However, because the Android operating system and the Linux operating system are two completely different systems, implementation logics, included components, and the like are also different, and the Android drag-and-drop protocol is incompatible with the x11 protocol, dragging and dropping across Android-Linux systems cannot be implemented finally.

In a related technology, a Windows operating system is compatible with a Linux ecosystem by using a WSLG system (Windows Subsystem for Linux GUI), and reconstructs backend-x11 in native weston, and extends clipboard sharing between a Linux application and a Windows application, that is, the Linux application can share file content with the Windows application by using a clipboard. However, direct dragging and dropping is still not supported between the Windows operating system and the Linux operating system.

In another related technology, a system interface is invoked between the Android operating system and the Windows operating system to implement a dragging-and-dropping capability across the Android operating system and the Windows operating system.

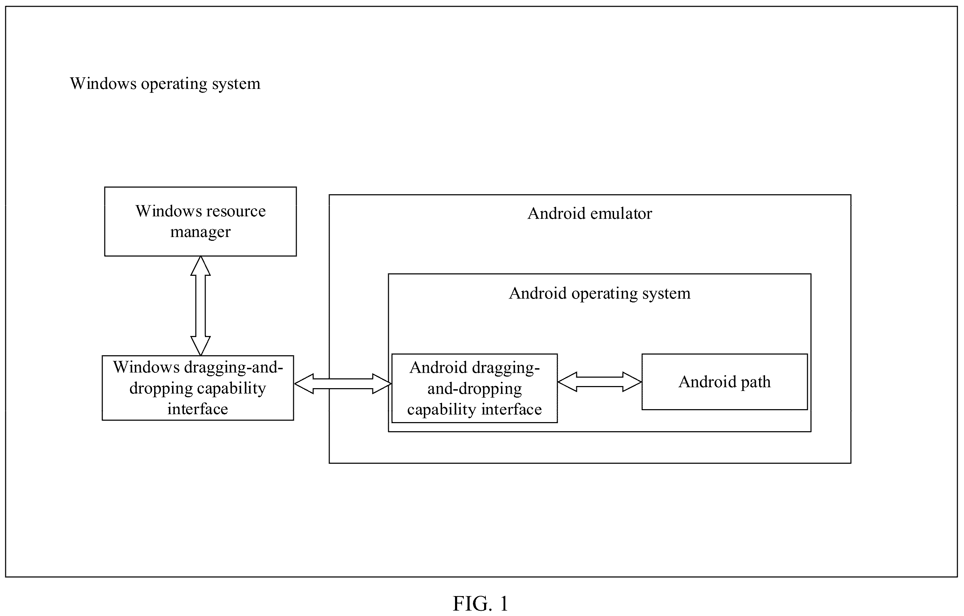

FIG. 1 is a diagram of a manner of dragging and dropping a target object across systems provided a related technology. As shown in FIG. 1, a Windows operating system runs on the electronic device, and an application of an Android operating system runs on the Windows operating system based on an Android emulator. As shown in FIG. 1, a Windows side includes a Windows dragging-and-dropping capability interface, an Android side includes an Android dragging-and-dropping capability interface, and the Windows side and the Android side implement dragging and dropping between Android and Windows by using the Windows dragging-and-dropping capability interface and the Android dragging-and-dropping capability interface.

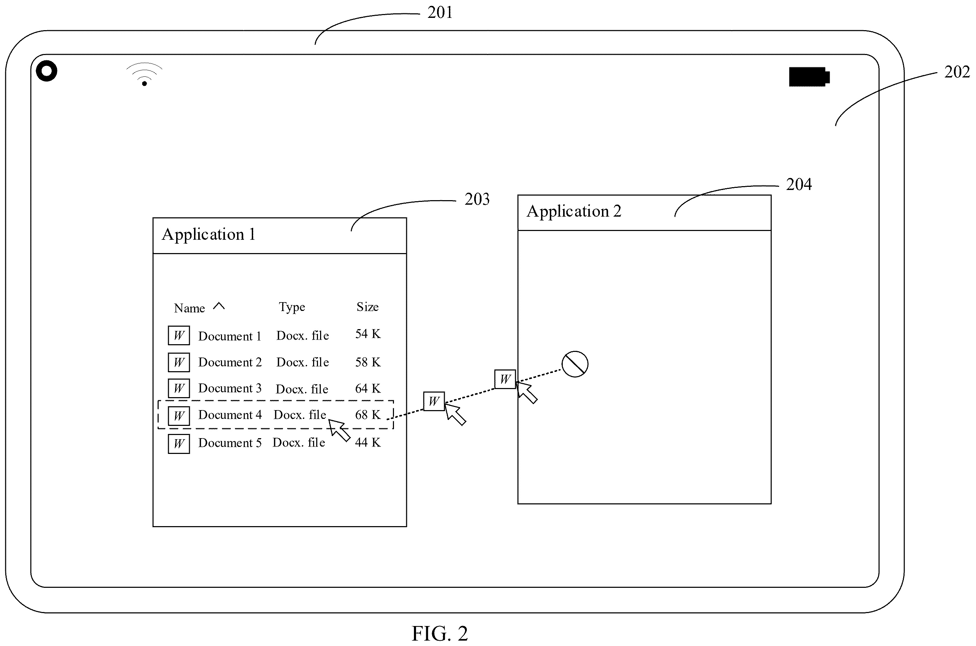

Because the Android operating system and the Linux operating system have no existing system interfaces that can be invoked, cross-system dragging and dropping cannot be implemented between the Android operating system and the Linux operating system. For example, FIG. 2 is a diagram of an interface for dragging and dropping a file between an Android operating system and a Linux operating system in a related technology. As shown in FIG. 2, a display window 203 of an application 1 is displayed on a display 202 of a tablet computer 201, and a display window 204 of an application 2 is further displayed. The application 1 is an Android application developed based on the Android operating system, and the application 2 is a Linux application developed based on the Linux operating system. A plurality of documents (a document 1, a document 2, a document 3, a document 4, and a document 5) are displayed in the display window 203. When a user wants to drag and drop the document 4 in the plurality of documents to the display window 204 of the Linux application, the Linux-side window does not allow drag-in. As shown in FIG. 2, a drag-and-drop forbidden identifier is displayed in the display window 204 to prompt the user.

It should be noted that the Android application mentioned in this application is developed based on the Android system and runs on a running environment provided by the Android system, and the Linux application is developed based on the Linux system and runs on a running environment provided by the Linux system.

In conclusion, how to drag and drop a target object between the Android application and the Linux application when the Linux application runs on the Android operating system is a problem that needs to be urgently resolved currently.

It should be noted that the Linux operating system supports the x11 drag-and-drop protocol, and the x11 drag-and-drop protocol describes how to exchange a message between the client (application) and the display server. A complete x11 drag-and-drop protocol specifies that to implement a drag-and-drop event, a drag-and-drop source (source window) and a target window should be included. To provide a capability of being compatible with the x11 drag-and-drop protocol implemented by a Linux application, a virtual source window may be constructed on this application to drag and drop the target object between the Android application and the Linux application.

In view of this, this application provides a method for dragging and dropping a target object across systems. The method includes: obtaining a drag-and-drop event in response to an operation of dragging the target object from a first application and dropping the target object to a second application by a user, where the drag-and-drop event includes a drag-and-drop event type and the target object; sending the drag-and-drop event to a second operating system, and creating a virtual window of the first application on the second operating system based on the drag-and-drop event; and sending the drag-and-drop event from the virtual window of the first application to the second application, and displaying the target object on the second application. The first application runs on a first operating system, and the second application runs on the second operating system. In the method, a virtual drag-and-drop source is created in the second operating system based on the drag-and-drop event, to implement a complete x11 drag-and-drop protocol, thereby dragging and dropping the target object between the first operating system and the second operating system.

The first operating system and the second operating system are different operating systems. For example, the first operating system may be a Windows operating system, an Android operating system, a Unix operating system, a DOS operating system, or a Mac OS operating system; and the second operating system may be a Linux operating system, an iOS operating system, a Harmony (Harmony) operating system, a Symbian (Symbian) operating system, a BlackBerry (BlackBerry) operating system, a Windows Mobile operating system, or a Palm operating system. Specific types of the first operating system and the second operating system are not limited in this embodiment of this application.

Before a method for dragging and dropping a target object across systems provided in this application is described, an electronic device provided in this application is first described in detail. An embodiment of this application provides an electronic device. The electronic device is configured to perform the method for dragging and dropping a target object across systems provided in this application. For example, the electronic device in this embodiment of this application may be a personal computer, various portable notebook computers, various tablet computers, a mobile phone, an automotive infotainment system, or the like. Optionally, the electronic device may alternatively be a personal digital assistant (personal digital assistant, PDA), a handheld device with a large display, a computing device, an in-vehicle device, a wearable device, an electronic device in a 5G network, an electronic device in an evolved public land mobile network (public land mobile network, PLMN), or the like. This is not limited in this embodiment of this application.

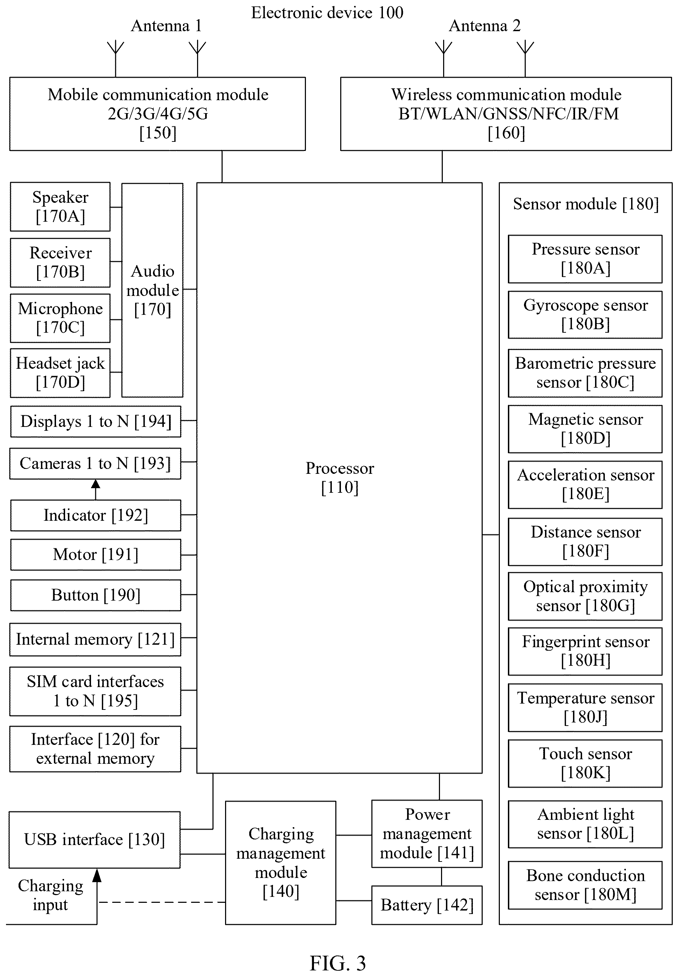

For example, FIG. 3 is an example diagram of a structure of an electronic device 100 according to this application. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

In this embodiment of this application, the processor 110 may run the first operating system, and the application of the second operating system may run on the first operating system based on an emulator.

The controller may be a nerve center and a command center of the electronic device 100. The controller may generate an operation control signal based on an instruction operation code and a timing signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and therefore improves system efficiency.

The memory is configured to store application code for executing the solutions of this application, and the processor 110 controls execution of the application code. The processor 110 is configured to execute the application code stored in the memory, to control the electronic device 100 to implement the method for dragging and dropping a target object across systems provided in embodiments of this application, thereby performing target object interaction between the application of first operating system and the application of the second operating system based on the drag-and-drop operation of the user.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between modules that is illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device by using the power management module 141.

A wireless communication function of the electronic device 100 may be implemented through the antenna 1, the antenna 2, the mobile communication module 150, the wireless communication module 160, the modem processor, the baseband processor, and the like.

The electronic device 100 implements a display function through the GPU, the display 194, the application processor, and the like. The GPU is an image processing microprocessor and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In this embodiment of this application, the display 194 may be configured to display a plurality of windows, including a window of an application of the first operating system and a window of an application of the second operating system.

The electronic device 100 may implement a shooting function through the ISP, the camera 193, the video codec, the GPU, the display 194, the application processor, and the like.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and a phone book) created during use of the electronic device 100, and the like. In addition, the internal memory 121 may include a high-speed random access memory, or may include a non-volatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display 194. In some other embodiments, the touch sensor 180K may also be disposed on a surface of the electronic device 100 at a location different from that of the display 194.

For example, in this embodiment of this application, the drag-and-drop operation of the user may be obtained by using the touch sensor 180K, and whether to drag from the first operating system and drop to the virtual shell APK of the second operating system is determined by using the touch sensor.

The button 190 includes a power button, a volume button, and the like. The motor 191 may generate a vibration prompt. The indicator 192 may be an indicator light, and may indicate a charging status and a power level change, or may indicate a message, a missed call, a notification, and the like. The SIM card interface 195 is configured to connect to a SIM card. It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

For ease of understanding, with reference to the accompanying drawings and an application scenario, the method for dragging and dropping a target object across systems provided in embodiments of this application is specifically described in the following embodiments of this application by using the electronic device with the structure shown in FIG. 3 as an example. Before the method for dragging and dropping a target object across systems provided in this application is described below, an electronic device, a system architecture, and an application scenario to which the method is applicable are first described.

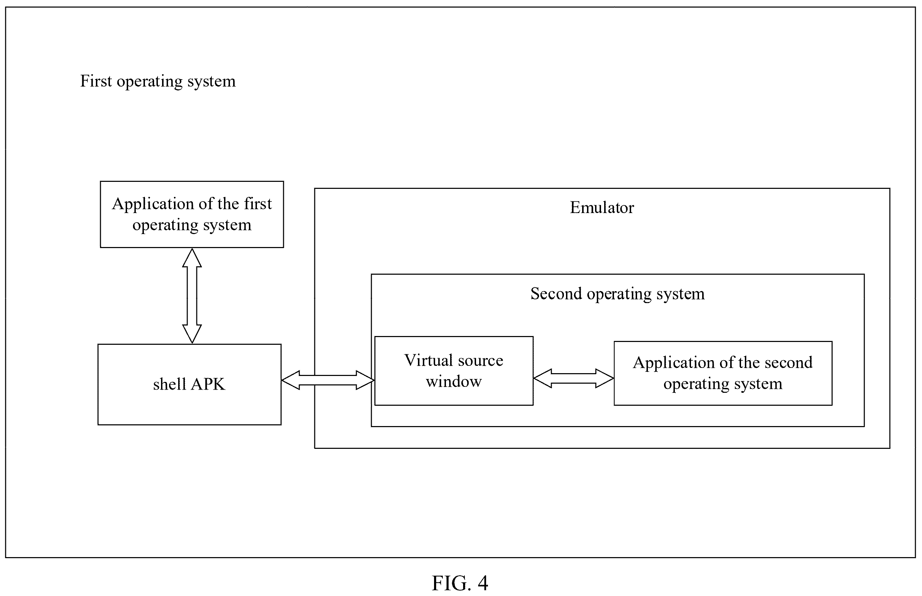

FIG. 4 is a diagram of an architecture to which a method for dragging and dropping a target object across systems is applicable according to an embodiment of this application. An execution body of the method may be an electronic device. As shown in FIG. 4, a first operating system runs on the electronic device, and an application of a second operating system runs on the first operating system based on an emulator. The first operating system runs an application of the first operating system, and the first operating system includes a shell (shell) application (Android Package, APK) of a second application. The second operating system runs an application of the second operating system, and the second operating system includes a virtual source window.

The application of the first operating system is used to provide a source window of the first operating system, that is, the user triggers a drag-and-drop operation in the source window of the application of the first operating system.

It should be noted that the shell in the first operating system is a shell protection tool of a kernel of the second operating system in the first operating system, and is used to complete interaction between the user and the kernel of the second operating system. After the drag-and-drop operation of the user sends a request to the operating system, the shell may be used as a command interpreter to parse the user command into an instruction that can be understood by the operating system, to implement interaction between the user and the operating system. The shell APK mentioned in this application may be understood as a shell protection tool corresponding to the application of the second operating system. There is a correspondence between the shell APK and the application of the second operating system. For example, when the application of the second operating system is WPS, the shell APK is a shell APK of WPS. The shell APK is configured to: obtain a drag-and-drop event of a user, package the drag-and-drop event, and send a packaged drag-and-drop event to the second operating system, to trigger the second operating system to create a virtual source window.

It should be further noted that the virtual source window on the second operating system may be understood as an emulated virtual window of the application of the first operating system, and the virtual source window is used as a drag-and-drop source to send the drag-and-drop event, to meet a complete x11 drag-and-drop protocol.

It should be noted that the virtual source window is a window invisible to the user. Because the window is only used to emulate the drag-and-drop source (a window of the application of the first operating system), the window does not need to be drawn, and only a window identifier (ID) or a handle needs to be allocated to the window. Because the window does not display content, the window may also be understood as the virtual source window.

It should be understood that an event type of the drag-and-drop event includes a drag-and-drop start event, a drag-in event, a move event, and a release event. Obtaining, by the electronic device, the drag-and-drop event and sending the drag-and-drop event to the second operating system are synchronous with the drag-and-drop operation of the user in the first operating system in real time. In other words, after obtaining the start event in the first operating system, the electronic device sends the start event to the second operating system in real time. After obtaining the drag-in event in the first operating system, the electronic device sends the drag-in event to the second operating system in real time. When the electronic device obtains the release event in the first operating system, it indicates that the drag-and-drop event ends. In this case, the electronic device sends the drag-and-drop event type corresponding to the drag-and-drop event and the target object to the second operating system. The virtual source window of the second operating system synchronizes the drag-and-drop event to the application of the second operating system in real time, to drag the target object from the application of the first operating system and drop the target object to the application of the second operating system.

It should be understood that, in this embodiment of this application, the target object may include a file, a text, or another transferable object. For example, the file may be a video file, an audio file, a document, a picture, a shortcut icon, or a compressed file, and the text may be a piece of text, a numeric sequence, or a character string.

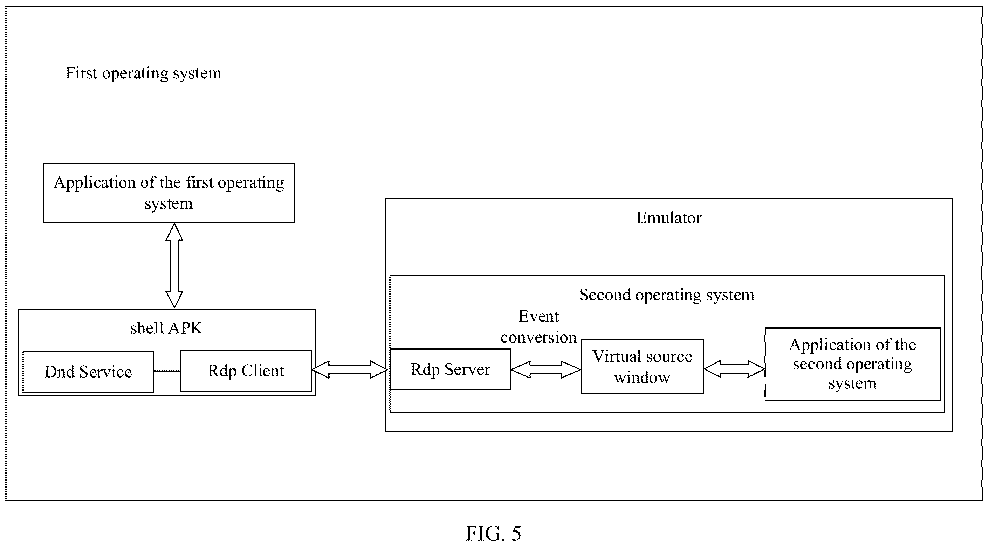

In a possible implementation, the execution body of the method may alternatively be the first operating system and the second operating system. The shell APK in the first operating system includes an event obtaining module and a first communication module, and the second operating system includes a second communication module. For example, FIG. 5 is a diagram of another architecture to which a method for dragging and dropping a target object across systems is applicable according to an embodiment of this application. As shown in FIG. 5, the shell APK in the first operating system includes a drag-and-drop (drag-and-drop, Dnd) service (Service) and the first communication module (for example, a remote display protocol (remote display protocol, RDP) client (Client)). The second operating system includes the second communication module (for example, an RDP Service). The RDP client communicates with the RDP service through the RDP protocol. Certainly, the first communication module and the second communication module may alternatively communicate in another communication manner. This is not limited in this embodiment of this application.

The Dnd service is configured to: obtain the drag-and-drop event of the user and package the drag-and-drop event of the user. The RDP client (client) is configured to send a packaged drag-and-drop event to the second operating system. The RDP service is configured to receive the drag-and-drop event sent by the first operating system, and then the second operating system creates the virtual source window based on the received drag-and-drop event, and sends the drag-and-drop event corresponding to the virtual source window to the application of the second operating system, to drag the target object from the application of the first operating system and drop the target object to the application of the second operating system.

With reference to the diagrams of the architectures shown in FIG. 4 and FIG. 5, the following specifically describes an application scenario to which the method for dragging and dropping a target object across systems provided in embodiments of this application is applicable by using an example in which the electronic device is a tablet computer, the first operating system is an Android operating system, and the second operating system is a Linux operating system.

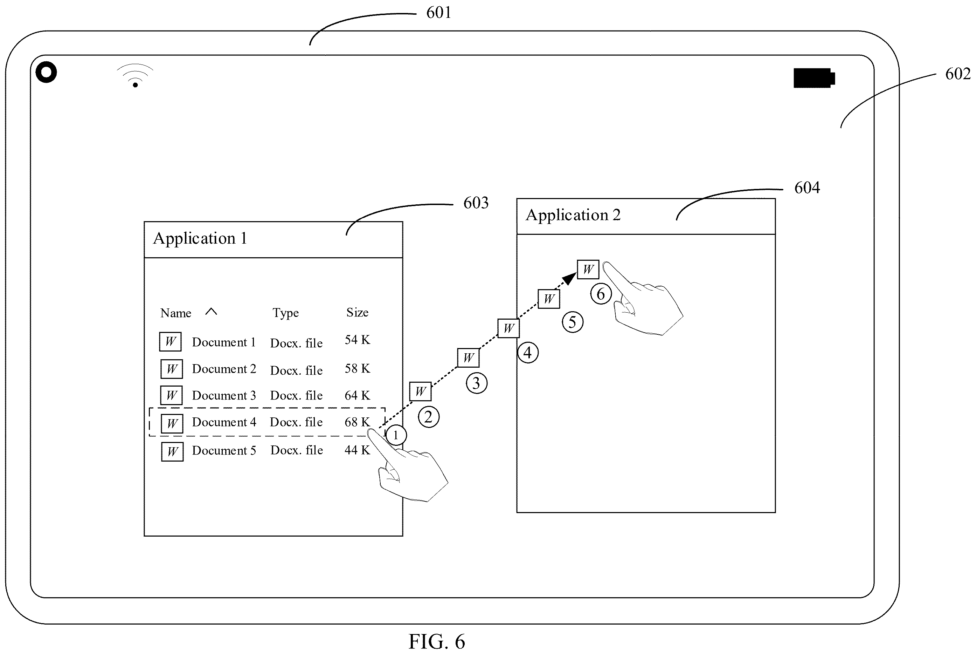

For example, FIG. 6 is a diagram of an interface for dragging and dropping a target object across systems according to an embodiment of this application. As shown in FIG. 6, a display window 603 of an application 1 is displayed on a display 602 of a tablet computer 601, and a display window 604 of an application 2 is further displayed. The application 1 is an Android application developed based on the Android operating system, and the application 2 is a Linux application developed based on the Linux operating system. A plurality of documents (a document 1, a document 2, a document 3, a document 4, and a document 5) are displayed in the display window 603. When the user wants to drag and drop the document 4 in the plurality of documents to the display window 604 of the Linux application, the user may drag a target object (for example, the document 4) from the display window 603 of the Android application and drop the target object to the display window 604 of the Linux application of the Linux operating system by using an input device such as a mouse or a touchscreen. As shown in FIG. 6, a drag-and-drop allowed identifier is displayed in the display window 604 to prompt the user, to remind the user that the document can be dragged in.

In some embodiments, in response to a drag-and-drop operation performed by the user on the display window 603, a shell APK in the Android operating system obtains a drag-and-drop start event of the user. With the drag-and-drop operation performed by the user on the display 602, the drag-and-drop event enters a shell APK window (invisible to the user), that is, the drag-and-drop event enters the Linux application corresponding to the shell APK.

Specifically, when the user performs a touch operation on the touchscreen of the electronic device shown in FIG. 6, the touch sensor may detect the touch operation performed by the user on the touchscreen. The touch sensor may transfer the detected touch operation to the processor, to determine a touch event type. Specifically, in a process from the time when the user starts to touch the touchscreen and slides until the hand is lifted, coordinate reporting events generated by a kernel layer sequentially include: a start event, several move events, and a release event, where a quantity of the move events depends on the time for which the touchscreen is touched.

Still with reference to FIG. 6, assuming that a coordinate system based on the touchscreen of the tablet computer uses a vertex of a lower left corner of the touchscreen as an origin, uses a length direction of the tablet computer as an X axis, and uses a width direction of the tablet computer as a Y axis, a location point 1 is location coordinates corresponding to the start event on the touchscreen, and a location point 2, a location point 3, a location point 4, and a location point 5 are respectively coordinate locations of the move events after the start event on the touchscreen, and a location point 6 is a coordinate location corresponding to the release event on the touchscreen. The electronic device may determine, based on location coordinates corresponding to the touch operation of the user and location coordinates corresponding to the shell APK, whether the drag-and-drop event enters the shell APK window. An event of entering the shell APK window is also referred to as an inter event, that is, the drag-in event is entered at a coordinate location corresponding to the location point 4. In this case, after the shell APK is entered, the move event is entered at the location point 5.

It should be understood that the shell APK is a shell application of the application of the second operating system. Therefore, the target object of the application of the first operating system cannot be displayed in the shell APK. After the drag-and-drop event enters the shell APK window, the shell APK packages the obtained drag-and-drop event and sends a packaged drag-and-drop event to the second operating system. In the example shown in FIG. 6, the shell APK is a shell APK of the Linux application. Therefore, a target object of the Android application cannot be displayed in the shell APK.

It should be noted that, the shell application may be understood as a window framework of the second operating system, and the window framework runs on the first operating system as a blank window, serving as a proxy of a display window of the second operation application for display in the first operating system.

Specifically, the drag-and-drop event includes a drag-and-drop event type. The drag-and-drop event type includes a start (Start) event, several move (Move) events, a release (Release) event, a finally determined drag-in (Inter) event, and the like, for example, events generated at the location point 1, the location point 2, the location point 3, the location point 4, the location point 5, and the location point 6 in FIG. 6. The drag-and-drop event further includes a target object to be dragged. For example, as shown in FIG. 6, the target object is the document 4.

It should be understood that the drag-and-drop event type sent by the first operating system to the second operating system may also be understood as a drag-and-drop location. When the user drags and drops the target object based on the mouse, the drag-and-drop location is a mouse drag-and-drop location. When the user drags and drops the target object by using a finger or through touch by using a stylus, the drag-and-drop location is a touch drag-and-drop location.

In a possible implementation, the shell APK of the Android operating system may include a Dnd service, and the Dnd service is used to obtain the drag-and-drop event and package the drag-and-drop event. The shell APK may further include an RDP client, and the obtained drag-and-drop event is sent to the second operating system by using the RDP client.

After the second operating system receives the drag-and-drop event sent by the first operating system, the second operating system may create a window object based on the obtained drag-and-drop event, and use a unique window ID as an identifier. The window corresponds to the source window on the first operating system. Because the window is invisible to the user, the window may also be referred to as the virtual source window.

For example, after the shell APK in the Android operating system sends the drag-and-drop event to the Linux operating system, the Linux operating system may create a window object based on the obtained drag-and-drop event, and use a unique window ID as an identifier. The window object corresponds to a window of the application of the Android operating system. Still with reference to FIG. 6, the window object created by the Linux operating system corresponds to the display window 603. In other words, because the display window 603 runs on the Android operating system, to drag and drop the document, based on the drag-and-drop protocol supported by the Linux operating system, the Linux operating system needs to emulate a virtual display window (invisible to the user) in the Linux operating system, to implement interaction between the virtual display window and the display window 604 of the application of the Linux operating system.

In some possible implementations, interaction between the virtual display window and the display window 604 of the application of the Linux operating system is implemented based on an x11 server. In other words, to meet the x11 drag-and-drop protocol, after the virtual display window corresponding to the source window is constructed, the Linux operating system first sends the obtained drag-and-drop event from the virtual display window to the x11 server, and then the x11 server forwards the drag-and-drop event to the Linux application.

It should be noted that the drag-and-drop event includes the start event, the several move events, the release event, and the finally determined inter event. The shell APK sends the drag-and-drop event to the Linux operating system in real time. After obtaining the inter event, the Linux operating system may create the window object for the virtual window corresponding to the source window and allocate the window ID, or may create the window object for the virtual window corresponding to the source window after receiving the move event and allocate the window ID. An occasion for allocating the window ID by the Linux operating system is not specifically limited in this embodiment of this application.

In this embodiment of this application, the target object corresponding to the drag-and-drop event may be a video file, an audio file, a document, a picture, a shortcut icon, a compressed file, or the like, or may be a piece of text, a numeric sequence, a character string, or the like.

Therefore, when the target object is a piece of text, a numeric sequence, a character string, or other text, text data is small, and the shell APK of the first operating system may directly send the text to the second operating system, without occupying a system process and wasting user time. However, when the target object is a file such as a video file, an audio file, a document, a picture, a shortcut icon, or a compressed file, file data is large. If the shell APK of the first operating system directly sends the file to the second operating system, the shell APK occupies a system process, takes some time, increases power consumption of the electronic device, and consequently degrades user experience.

Based on this, a shared directory may be established between the first operating system and the second operating system. The first operating system may send, to the second operating system by using the shell APK, a path for obtaining the target object from the shared directory. After converting the path into a path for the second operating system to obtain the target object from the shared directory, the second operating system obtains the target object from the shared directory based on the converted path. This manner can avoid reducing power consumption of the electronic device due to occupation of the system internal memory, and enhance user experience.

It should be noted that physical paths of the target object in the shared directory are the same, and the path for the first operating system to obtain the target object from the shared directory is different from the path for the second operating system to obtain the target object from the shared directory.

It should be further noted that the first operating system may further send a file quantity of the target object, a file type, a total file size, and the like to the second operating system. Certainly, other information related to the target object may be further sent. This is not specifically limited in this embodiment of this application.

For example, in the example shown in FIG. 6, the target object dragged by the application of the Android operating system and dropped to the application of the Linux operating system is the document 4. In this case, a shared directory may be established between the Android operating system and the Linux operating system, and the Android operating system sends the drag-and-drop event to the Linux operating system. The drag-and-drop event includes the start event, the several move events, the release event, and the inter event that are mentioned above. The Android operating system further needs to send, to the Linux operating system, a path for the Android operating system to obtain the document 4 from the shared directory, and the Android operating system may further send, to the Linux operating system, information such as a file quantity of 1, a document type of Docx, and a document size of 68 k.

In some embodiments, the Linux operating system may receive the drag-and-drop event and the path that corresponds to the target object that are sent by the Android operating system.

In a possible implementation, the Linux operating system may include an RDP service, and the RDP service is used to receive a drag-and-drop event and a path that are sent by an RDP client in the Android operating system.

After obtaining the drag-and-drop event type and the target object, the second operating system converts the drag-and-drop event type and the target object of the first operating system into a drag-and-drop event type and a target object of the second operating system. The converted drag-and-drop event type and the data structure of the target object are types that can be recognized by the second operating system. In addition, the second operating system sends the drag-and-drop event type and the target object to a target application in real time for display.

For example, the Linux operating system converts the obtained data structure types of the drag-and-drop events at the location 4, the location 5, and the location 6 into types that can be recognized by the Linux operating system. In addition, the drag-and-drop events at the location 4, the location 5, and the location 6 are sent to the display window 604 of the application of the Linux operating system in real time. As shown in FIG. 6, a document dragging-and-dropping process can be seen in the display window 604, and finally, the obtained data type of the document 4 is converted into a type that can be recognized by the Linux operating system, and then the document 4 is sent to the display window 604 of the application of the Linux operating system in real time. After a release operation is completed at the location 6, the document 4 is successfully dragged and dropped to the display window 604 of the application of the Linux operating system.

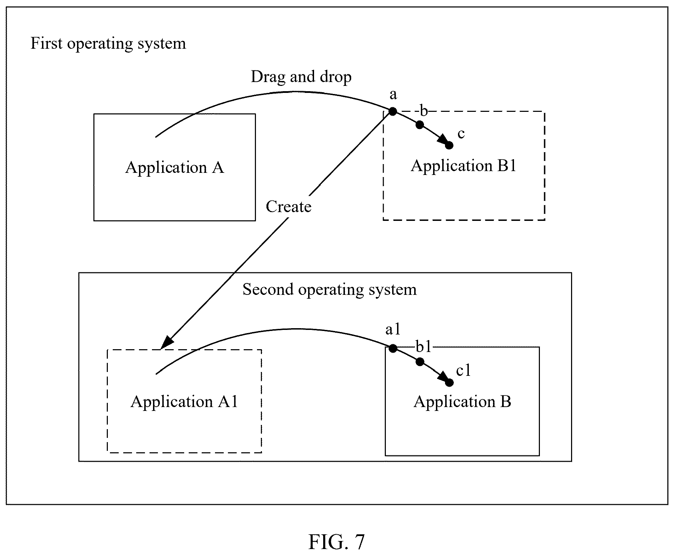

For ease of understanding, FIG. 7 is a principle diagram of a method for dragging and dropping a target object across systems according to an embodiment of this application. The following describes, with reference to the principle diagram shown in FIG. 7, the method for dragging and dropping a target object across systems provided in this application. As shown in FIG. 7, a first operating system and a second operating system run on an electronic device, an application A runs on the first operating system, and an application B runs on the second operating system. Because the application B in the second operating system runs on the first operating system in a container manner, the first operating system includes a shell application B1 of the application B. When a user drags a target object from a window in which the application A runs on the first operating system and drops the target object to a window of the application B in the second operating system, the shell application B1 in the first operating system obtains a drag-and-drop event of the user, where the event includes a drag-and-drop start event, a drag-in event (a location a), a move event (a location b), and a release event (a location c). After the release event occurs, the shell application B1 further obtains the target object. After the shell application B1 obtains the drag-and-drop event, the shell application B1 sends the drag-and-drop event to the second operating system, and the second operating system creates a virtual drag-and-drop window based on the received drag-and-drop event, that is, an application window A1 shown in FIG. 7. The application window A1 emulates the window of the application A. After receiving the drag-and-drop event, the second operating system sends the drag-and-drop event from the application window A1 to the application B in the second operating system, and finally displays the target object on the application B.

The foregoing describes, with reference to FIG. 4, FIG. 5, FIG. 6, and FIG. 7, the manner of dragging and dropping a target object across systems. To be specific, in response to the drag-and-drop operation of the user from the first source window on the first operating system to the shell application window on the first operating system, the shell application window corresponds to the target window on the second operating system. The shell application window obtains the drag-and-drop event and sends the drag-and-drop event and the target file to the second operating system. The second operating system creates a second source window based on the received drag-and-drop event, where the second source window corresponds to the first source window. Then, the second operating system sends the received target file from the second source window to the target window, to finally drag and drop the target object. In the method, the window that is the same as the drag-and-drop source of the first operating system is emulated in the second operating system, to implement the complete x11 drag-and-drop protocol, thereby dragging and dropping the target object across systems.

In some embodiments, this application further provides another application scenario to which a method for dragging and dropping a target object across systems is applicable. With reference to the diagrams of the architectures shown in FIG. 4 and FIG. 5, the following specifically describes, by using an example in which the electronic device is a tablet computer, the another application scenario to which the method for dragging and dropping a target object across systems provided in this embodiment of this application is applicable.

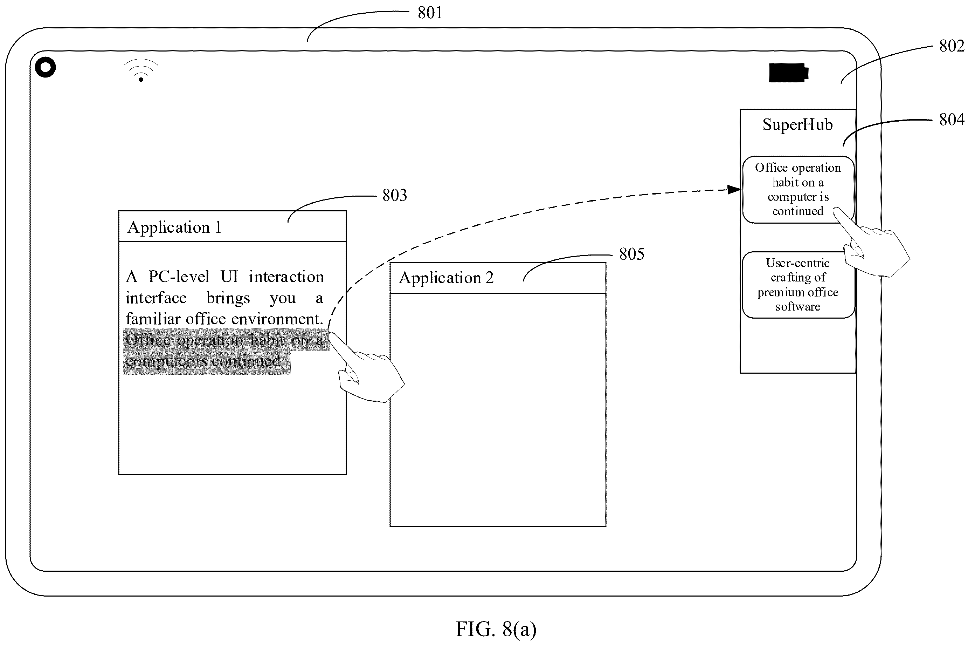

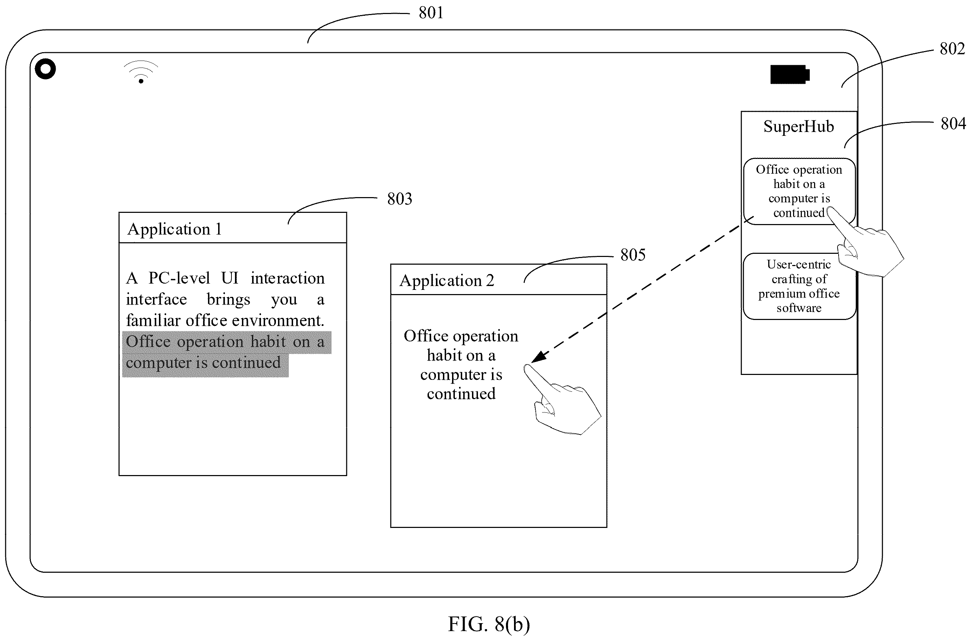

For example, FIG. 8(a) and FIG. 8(b) are diagrams of another interface for dragging and dropping a target object across systems according to an embodiment of this application. As shown in FIG. 8(a), a display window 803 of an application 1, a SuperHub 804, and a display window 805 of an application 2 are displayed on a display 802 of a tablet computer 801. The application 1 is an Android application developed based on the Android operating system, and the application 2 is a Linux application developed based on the Linux operating system. A piece of text "A PC-level UI interaction interface brings you a familiar office environment. Office operation habit on a computer is continued" is displayed in the display window 803, and a piece of text dragged and dropped from the display window 803 of the Android application and a piece of text dragged and dropped from another application are displayed on the SuperHub.

It should be understood that the SuperHub may be an application running in the Android operating system. In this case, when the Android operating system drags a piece of text from the display window 803 of the Android application and drops the text to a display window of the SuperHub 804, the Android operating system may directly drag and drop the text without obtaining the drag-and-drop event by using the shell APK in the diagrams of the architectures shown in FIG. 4 and FIG. 5 and forwarding the drag-and-drop event to the Linux operating system.

When the user drags, from the SuperHub, the piece of text "Office operation habit on a computer is continued" and drops the text to the display window 805 of the Linux application of the Linux operating system, a display interface of the electronic device is switched from the interface shown in FIG. 8(a) to the interface shown in FIG. 8(b).

For a specific process in which the display interface of the electronic device is switched from FIG. 8(a) to FIG. 8(b), refer to the corresponding description of FIG. 6. Details are not described herein again.

It can be learned from the scenario diagram shown in FIG. 8(a) and FIG. 8(b) that, when a drag-and-drop operation occurs in a same operating system, the electronic device does not trigger a shell application to forward a drag-and-drop event, and dragging and dropping may be directly performed based on an existing drag-and-drop protocol. However, when the drag-and-drop operation occurs in different operating systems, the shell application of the electronic device forwards the drag-and-drop event to another operating system after obtaining the drag-and-drop event, so that the another operating system creates a drag-and-drop source based on the drag-and-drop event, thereby implementing a cross-system drag-and-drop operation.

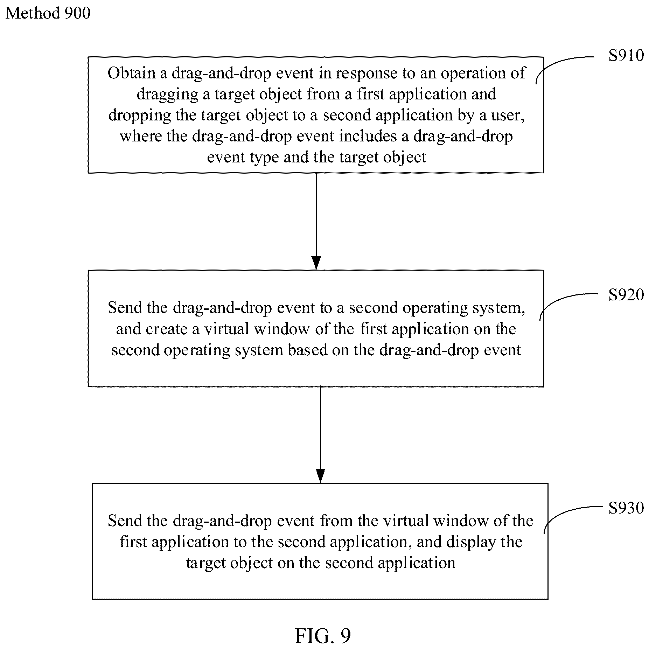

The following describes, with reference to the scenario diagrams in FIG. 6 and FIG. 8(a) and FIG. 8(b), a method for dragging and dropping a target object across systems according to an embodiment of this application. FIG. 9 is a schematic flowchart of a method 900 for dragging and dropping a target object across systems according to an embodiment of this application. As shown in FIG. 9, the method 900 shown in FIG. 9 may include step S910 and step S930. The following describes steps in the method 900 in detail with reference to FIG. 9.

It should be understood that, in this embodiment of this application, the method 900 is described by using an example in which an electronic device is used as an execution body that performs the method 900. As an example rather than a limitation, the execution body that performs the method 900 may alternatively be a chip used in the electronic device.

S910: Obtain a drag-and-drop event in response to an operation of dragging a target object from a first application and dropping the target object to a second application by a user, where the drag-and-drop event includes a drag-and-drop event type and the target object.

It should be noted that the first application is an application that runs on a first operating system, and the second application is an application that runs on a second operating system. The application on the second operating system may run in the first operating system in a form of a guest, a virtual machine, a container, or the like.

In this embodiment of this application, the drag-and-drop event type includes a drag-and-drop start event, a drag-in event, a move event, a release event, and the like. Certainly, the drag-and-drop event type may further include another event type, for example, a leave event. This is not limited in this embodiment of this application.

In some embodiments, the target object may include a file, a text, or another transferable object. For example, the file may be a video file, an audio file, a document, a picture, a shortcut icon, or a compressed file, and the text may be a piece of text, a numeric sequence, or a character string.

For example, the first operating system may be an Android operating system, and the second operating system may be a Linux operating system. The first application may be the Android application shown in FIG. 6, and the second application may be the Linux application shown in FIG. 6. The operation of dragging the target object from the first application and dropping the target object to the second application by the user may be the operation of dragging the document 4 in the display window 603 of the Android application to the display window 604 of the Linux application, as shown in FIG. 6.

In step S910, for a specific process of obtaining the drag-and-drop event in response to the operation of dragging the target object from the first application and dropping the target object to the second application by the user, refer to the description of FIG. 6. Details are not described herein again.

S920: Send the drag-and-drop event to the second operating system, and create a virtual window of the first application on the second operating system based on the drag-and-drop event.

In this embodiment of this application, because the second application runs on the first operating system in a form of a guest, a virtual machine, a container, or the like, after obtaining the drag-and-drop event, the electronic device needs to send the drag-and-drop event obtained in the first operating system to the second operating system, and then after obtaining the drag-and-drop event, the second operating system creates the virtual window corresponding to the first application, to construct a complete x11 drag-and-drop protocol, and finally drag and drop the target object between the first operating system and the second operating system.

In some embodiments, the created virtual window of the first application may be a window ID allocated by the electronic device to the virtual window, and the drag-and-drop event is sent to the second application based on the window ID. The window ID may also be understood as a window handle.

For example, as shown in FIG. 6, after the electronic device sends the drag-and-drop operation of the document 4 to the Linux operating system, the electronic device creates a window ID in the second operating system as the virtual window of the Android application.

In step S920, for a specific process of sending the drag-and-drop event to the operating system and creating the virtual window of the first application on the second operating system based on the drag-and-drop event, refer to the description in FIG. 6. Details are not described herein again.

S930: Send the drag-and-drop event from the virtual window of the first application to the second application, and display the target object on the second application.

In step S930, the drag-and-drop event is sent to the second application by using the virtual source window (the virtual window of the first application) created in the second application, so that the target object is dragged from the first application and dropped to the second application, and finally the dragged and dropped target object is displayed in the second application.

According to the method for dragging and dropping a target object across systems provided in this application, after obtaining the cross-system drag-and-drop operation of the user, the electronic device sends the drag-and-drop event to the second operating system, and emulates, in the second operating system, the window that is the same as a drag-and-drop source of the first operating system, to implement a complete x11 drag-and-drop protocol, thereby dragging and dropping the target object across systems.

In some possible implementations, a first source window is displayed on the first application, the target object is displayed in the first source window, the first operating system includes a shell application shell APK of the second application, and the electronic device obtains the drag-and-drop event in response to the drag-and-drop operation performed by the user from the first source window to the shell application.

In some possible implementations, the electronic device creates a second source window on the second operating system based on the drag-and-drop event, where the second source window corresponds to the first source window. In this implementation, the second source window on the second operating system emulates the first source window (the drag-and-drop source) on the first operating system, to construct a complete x11 drag-and-drop protocol and implement a cross-system drag-and-drop operation.

In a possible implementation, the electronic device sends the drag-and-drop event from the second source window to the second application. In this implementation, as the drag-and-drop source, the second source window emulated by the second operating system sends the drag-and-drop event to the second application, to implement a cross-system drag-and-drop operation.

In some possible implementations, the electronic device converts a data structure of the drag-and-drop event in the first operating system into a drag-and-drop event of a data structure supported by the second operating system.

In some possible implementations, the electronic device sends a first path to the second operating system, where the first path indicates a path for the first operating system to obtain the target object from a shared directory; converts the first path into a second path, where the second path is a path for the second operating system to obtain the target object from the shared directory; and obtains the target object from the shared directory based on the second path. In this implementation, when data of the target object is excessively large, the data is transmitted in a manner of the shared directory. This can avoid reducing power consumption of the electronic device due to occupation of the system internal memory, and enhance user experience.

In some possible implementations, the first operating system and the second operation communicate based on a Remote Desktop Protocol RDP.

The foregoing describes in detail an example of the method for dragging and dropping a target object across systems provided in this application. It may be understood that, to implement the foregoing functions, the electronic device includes corresponding hardware structures and/or software modules for performing the functions. A person skilled in the art should be easily aware that, units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, the method for dragging and dropping a target object across systems may be divided into functional units based on the foregoing method example. For example, each functional unit may be obtained by dividing the functions, or two or more functions may be integrated into one unit. The integrated unit may be implemented in a form of hardware, or may be implemented in a form of a software functional unit. It should be noted that, in this application, division into the units is an example, and is merely a logical function division. In actual implementation, another division manner may be used.

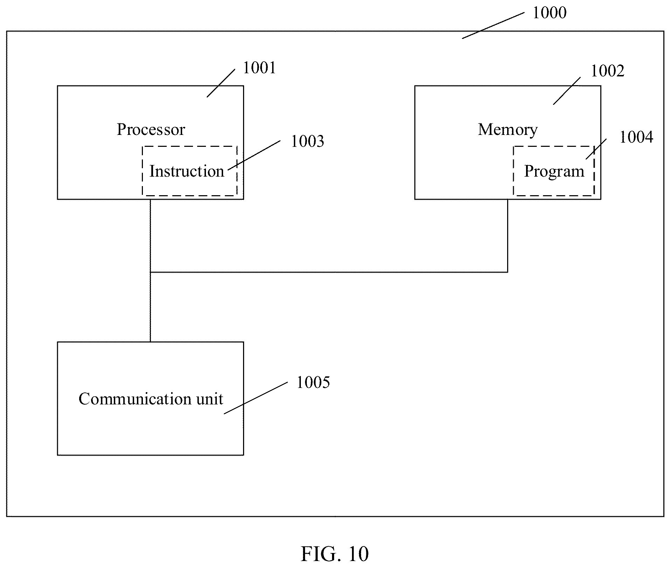

FIG. 10 is a diagram of a structure of an electronic device according to this application. A dashed line in FIG. 10 indicates that the unit or the module is optional. The electronic device 1000 may be configured to implement the method described in the foregoing method embodiment. The electronic device 1000 may be a terminal device or a server, or may be a module (for example, a processor, a chip, or a chip system) used in a terminal device or a server, or a logical node, a logical module, or software that can implement all or some terminal functions, or a logical node, a logical module, or software that can implement all or some server functions.

The electronic device 1000 includes one or more processors 1001. The one or more processors 1001 may support the electronic device 1000 in implementing the method in the method embodiment corresponding to FIG. 9. The processor 1101 may be a general-purpose processor or a dedicated processor. For example, the processor 1001 may be a central processing unit (Central Processing Unit, CPU). The CPU may be configured to: control the electronic device 1000, execute a software program, and process data of the software program. The electronic device 1000 may further include a communication unit 1005, configured to implement signal input (receiving) and output (sending).

The electronic device 1000 may be a chip (system). The chip (system) includes a memory and a processor. The processor is configured to execute a computer program stored in the memory, to implement the methods shown in the foregoing embodiments.

The communication unit 1005 may be an input and/or output circuit of the chip (system), or the communication unit 1005 may be a communication interface of the chip (system). The chip (system) may be used as a component of the electronic device 1000.

For another example, the communication unit 1005 may be a transceiver of the electronic device 1000, or the communication unit 1005 may be a transceiver circuit of the electronic device 1000.

The electronic device 1000 may include one or more memories 1002. The memory 1002 stores a program 1004. The program 1004 may be run by the processor 1001 to generate instructions 1003, to enable the processor 1001 to perform, according to the instructions 1003, the method described in the foregoing method embodiment. Optionally, the memory 1002 may further store data. Optionally, the processor 1001 may further read the data stored in the memory 1002. The data and the program 1004 may be stored at a same storage address, or the data and the program 1004 may be stored at different storage addresses.

The processor 1001 and the memory 1002 may be disposed separately, or may be integrated together, for example, integrated on a system on chip (System On Chip, SOC) of the electronic device.

For a specific manner in which the processor 1001 performs the method for dragging and dropping a target object across systems, refer to related descriptions in the method embodiment.

It should be understood that the steps in the foregoing method embodiment may be completed by using a logic circuit in a hardware form in the processor 1001 or instructions in a software form. The processor 1001 may be a CPU, a digital signal processor (Digital Signal Processor, DSP), a field programmable gate array (Field Programmable Gate Array, FPGA), or another programmable logic device, for example, a discrete gate, a transistor logic device, or a discrete hardware component.

This application further provides a computer program product. When the computer program product is executed by the processor 1001, the method in any method embodiment of this application is implemented.

The computer program product may be stored in the memory 1002. For example, the computer program product is the program 1004. After processing processes such as preprocessing, compilation, assembly, and linking, the program 1004 is finally converted into an executable target file that can be executed by the processor 1001.

This application further provides a computer-readable storage medium, where the computer-readable storage medium stores a computer program, and when the computer program is executed by a computer, the method in any method embodiment in this application is implemented. The computer program may be a high-level language program, or may be an executable target program.

The computer-readable storage medium is, for example, the memory 1002. The memory 1002 may be a volatile memory or a nonvolatile memory, or the memory 1002 may include both a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (SynchLink DRAM, SLDRAM), and a direct rambus random access memory (Direct Rambus RAM, DRRAM).

It may be clearly understood by a person skilled in the art that, for ease and brevity of description, for a specific working process and a generated technical effect of the foregoing apparatus and device, refer to a corresponding process and technical effect in the foregoing method embodiments, and details are not described herein again.

In the several embodiments provided in this application, the disclosed systems, apparatuses and methods may be implemented in other manners. For example, some features of the method embodiments described above may be ignored or not performed. The described apparatus embodiments are merely examples. Division into the units is merely logical function division and may be other division in actual implementation. A plurality of units or components may be combined or integrated into another system. In addition, coupling between the units or coupling between the components may be direct coupling or indirect coupling, and the coupling may include an electrical connection, a mechanical connection, or another form of connection.

The foregoing embodiments are merely used to describe the technical solutions of this application, but are not intended to limit the technical solutions. Although this application is described in detail with reference to the foregoing embodiments, a person of ordinary skill in the art should understand that they may still make modifications to the technical solutions described in the foregoing embodiments or make equivalent replacements to some technical features thereof. These modifications or replacements do not depart from the spirit and scope of the technical solutions of embodiments of this application, and shall fall within the protection scope of this application.

Finally, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for dragging and dropping a target object across systems, wherein the method is applied to an electronic device, the electronic device comprises a first operating system and a second operating system, a first application runs on the first operating system, a second application runs on the second operating system, and the method comprises:
obtaining a drag-and-drop event in response to an operation of dragging the target object from the first application and dropping the target object to the second application by a user;
sending the drag-and-drop event to the second operating system, and creating a virtual window of the first application on the second operating system based on the drag-and-drop event; and
sending the drag-and-drop event from the virtual window of the first application to the second application, and displaying the target object on the second application.

2. The method according to claim 1, wherein the drag-and-drop event comprises a drag-and-drop event type and the target object.

3. The method according to claim 2, wherein the drag-and-drop event type comprises at least one of a drag-in event, a move event, and a release event.

4. The method according to any one of claims 1 to 3, wherein a first source window is displayed on the first application, the target object is displayed in the first source window, the first operating system comprises a shell application of the second application, and obtaining the drag-and-drop event in response to the operation of dragging the target object from the first application and dropping the target object to the second application by the user comprises:
obtaining the drag-and-drop event in response to a drag-and-drop operation performed by the user from the first source window to the shell application.

5. The method according to claim 4, wherein creating the virtual window of the first application on the second operating system based on the drag-and-drop event comprises:
creating a second source window on the second operating system based on the drag-and-drop event, wherein the second source window corresponds to the first source window.

6. The method according to claim 5, wherein sending the drag-and-drop event from the virtual window of the first application to the second application comprises:
sending the drag-and-drop event from the second source window to the second application.

7. The method according to any one of claims 1 to 6, wherein before creating the virtual window of the first application on the second operating system based on the drag-and-drop event, the method further comprises:
converting a data structure of the drag-and-drop event into a data structure supported by the second operating system.

8. The method according to any one of claims 1 to 7, wherein the electronic device comprises a shared directory of the first operating system and the second operating system, and sending the drag-and-drop event from the virtual window of the first application to the second application comprises:
sending a first path to the second operating system, wherein the first path indicates a path for the first operating system to obtain the target object from the shared directory;
converting the first path into a second path, wherein the second path is a path for the second operating system to obtain the target object from the shared directory; and
obtaining the target object from the shared directory based on the second path.

9. The method according to any one of claims 1 to 8, wherein the virtual window of the first application comprises a handle of the virtual window of the first application.

10. The method according to any one of claims 1 to 9, wherein the first operating system and the second operation communicate based on a Remote Desktop Protocol RDP.

11. An electronic device, wherein the electronic device comprises a first operating system and a second operating system, a first application runs on the first operating system, and a second application runs on the second operating system;
the first operating system is configured to obtain a drag-and-drop event in response to an operation of dragging a target object from the first application and dropping the target object to the second application by a user;
the first operating system is further configured to send the drag-and-drop event to the second operating system;
the second operating system is configured to create a virtual window of the first application on the second operating system based on the drag-and-drop event; and
the second operating system is further configured to: send the drag-and-drop event from the virtual window of the first application to the second application, and display the target object on the second application.

12. The electronic device according to claim 11, wherein the drag-and-drop event comprises a drag-and-drop event type and the target object.

13. The electronic device according to claim 11, wherein the drag-and-drop event type comprises at least one of a drag-in event, a move event, and a release event.

14. The electronic device according to any one of claims 11 to 13, wherein a first source window is displayed on the first application, the target object is displayed in the first source window, and the first operating system comprises a shell application of the second application; and
the first operating system is configured to obtain the drag-and-drop event in response to a drag-and-drop operation performed by the user from the first source window to the shell application.

15. The electronic device according to claim 14, wherein
the second operating system is configured to create a second source window based on the drag-and-drop event, wherein the second source window corresponds to the first source window.

16. The electronic device according to claim 15, wherein the second operating system is configured to send the drag-and-drop event from the second source window to the second application.

17. The electronic device according to any one of claims 11 to 16, wherein the second operating system is configured to convert a data structure of the drag-and-drop event into a data structure supported by the second operating system.

18. The electronic device according to any one of claims 11 to 17, wherein the electronic device comprises a shared directory of the first operating system and the second operating system;
the first operating system is configured to send a first path to the second operating system, wherein the first path indicates a path for the first operating system to obtain the target object from the shared directory;
the second operating system is configured to convert the first path into a second path, wherein the second path is a path for the second operating system to obtain the target object from the shared directory; and
the second operating system obtains the target object from the shared directory based on the second path.

19. The electronic device according to any one of claims 11 to 18, wherein the virtual window of the first application comprises a handle of the virtual window of the first application.

20. The electronic device according to any one of claims 11 to 19, wherein the first operating system and the second operation communicate based on a Remote Desktop Protocol RDP.

21. The electronic device according to any one of claims 14 to 20, wherein the shell application of the second application comprises a drag-and-drop service module, and the drag-and-drop service module is configured to obtain the drag-and-drop event.

22. The electronic device according to any one of claims 11 to 21, wherein the first operating system comprises an RDP client, the second operating system comprises an RDP server, the RDP client is configured to send the drag-and-drop event to the second operating system, the RDP server is configured to receive the drag-and-drop event, and the RDP client and the RDP server communicate based on the RDP.

23. An electronic device, comprising a memory and a processor, wherein the memory is configured to store a computer program, and the processor is configured to perform the method according to any one of claims 1 to 10 when invoking the computer program.

24. The electronic device according to claim 23, wherein the electronic device is any one of a mobile phone, a tablet, a personal computer, or an automotive infotainment system.

25. A computer-readable storage medium, storing a computer program, wherein when the computer program is executed by a processor, the method according to any one of claims 1 to 10 is implemented.

26. A computer program product, wherein when the computer program product runs on an electronic device, the electronic device is enabled to perform the method according to any one of claims 1 to 10.
